# EUROPÄISCHE PATENTSCHRIFT

(11) **EP 3 844 002 B1**
(45) Veröffentlichungstag und Bekanntmachung des Hinweises auf die Patenterteilung: **28.09.2022**
(21) Anmeldenummer: 19749665.6
(22) Anmeldetag: 29.07.2019
(51) Int. Cl.: B60C 1/00

(54) **FAHRZEUGLUFTREIFEN**
PNEUMATIC TYRE
PNEUMATIQUE

(30) Priorität: 30.08.2018 DE 102018214700
(43) Veröffentlichungstag der Anmeldung: 07.07.2021
(73) Patentinhaber: Continental Reifen Deutschland GmbH, 30165 Hannover (DE)
(72) Erfinder: PETERS, Fabian, 30165 Hannover (DE); JEROMIN, Dieter, 30165 Hannover (DE); PLÜCKERS, Matthias, 30165 Hannover (DE); FINGER, Sebastian, 30165 Hannover (DE)
(74) Vertreter: Continental Corporation
(86) Internationale Anmeldenummer: PCT/EP2019/070294
(87) Internationale Veröffentlichungsnummer: WO 2020/043407

(56) Entgegenhaltungen:
- WO-A1-2015/043789
- DE-A1-102011 001 797
- DE-A1-102015 215 327

## Beschreibung

Die Erfindung betrifft einen Fahrzeugluftreifen mit einem Innerliner aus einer schwefelvernetzten Kautschukmischung.

In schlauchlosen Fahrzeugluftreifen sorgt ein möglichst luftundurchlässiger, radial innen angeordneter Innerliner, auch Innenseele oder Innenplatte genannt, dafür, dass die in den Reifen eingepumpte Luft nicht entweicht. Dem Entweichen der Luft muss entgegengewirkt werden, da das Entweichen zu einem Minderdruck in Reifen führt, der die Haltbarkeit des Reifens stark beeinträchtigt. Ferner schützt der Innerliner die Karkasse vor dem Eindiffundieren von Luft und Feuchtigkeit, denn durch Luft und Feuchtigkeit können die Festigkeitsträger der Karkasse und/oder des Gürtels Schaden nehmen. Damit der Innerliner luftdicht bleibt, muss er auch eine gute Riss- und Ermüdungsbeständigkeit aufweisen, damit im Fahrbetrieb keine Risse entstehen, die die Luftdichtigkeit beeinträchtigen.

Als Kautschuke für den Innerliner werden üblicherweise Butylkautschuk, Chlorbutylkautschuk oder Brombutylkautschuk, gelegentlich im Verschnitt mit anderen Dienkautschuken, eingesetzt. Butyl- und Halobutylkautschuke weisen eine geringe Gasdurchlässigkeit auf. Der Verschnitt von Butyl- und Halobutylkautschuk mit Kautschuken, ausgewählt aus der Gruppe, bestehend aus Polybutadien, Styrol-Butadien-Copolymer, 3,4-Polyisopren, cis-1,4-Polyisopren, Naturkautschuk, epoxidiertem Naturkautschuk, Styrol-Isopren-Copolymer und Styrol-Isopren-Butadien-Terpolymer, erfolgt aus Gründen der Erhöhung der Konfektionsklebrigkeit, der Kostenreduzierung und der Verbesserung der mechanischen Eigenschaften.

Durch die Zudosierung von voluminösen wenig bzw. nicht aktiven Füllstoffen kann die Luftdichtigkeit von Mischungen auf der Basis von Butyl- oder Halobutylkautschuk weiter erhöht werden. Zu diesen Füllstoffen zählen z. B. Kaolin, Ruß des Typs N 660 und Kreide. Da Innerliner aber, um bei dynamischen Beanspruchungen Rissbildungen zu verhindern, einen niedrigen Elastizitätsmodul und eine geringe Härte aufweisen sollten, dies aber im Widerspruch zu einem hohen Anteil an nicht aktiven Füllstoffen steht, werden der Kautschukmischung in der Regel Mineralölweichmacher zugesetzt, die den Elastizitätsmodul und die Härte der Mischung reduzieren, aber auch gleichzeitig die Gasdurchlässigkeit wieder erhöhen, woraus sich ein enger, optimaler Bereich für die eingesetzten Mineralölweichmacher- und Füllstoffmengen ergibt.

Es ist bekannt, alternativ zu Mineralölweichmachern oder additiv zu diesen Harze in Kautschukmischungen für Innerliner von Fahrzeugluftreifen einzusetzen.

Aus der WO 2010/024955 A1 sind Kautschukmischungen für Innerliner von Fahrzeugluftreifen bekannt, die aromatische Kohlenwasserstoffharze, wie Struktol^{®} 40 MS (Bitumen), mit einem Erweichungspunkt zwischen 75 und 120 °C und gleichzeitig aliphatische Kohlenwasserstoffharze, wie Escorez^{™} 1102, mit einer Glasübergangstemperatur von mehr als 40 °C und einem Erweichungspunkt von weniger als 140 °C aufweisen.

In der EP 2 957 592 A1 werden Kautschukmischungen für Innerliner von Fahrzeugluftreifen beschrieben, die für gute Gasdichtigkeit bei guter Rissbeständigkeit bei tiefen Temperaturen einen Ester einer aliphatischen dibasischen Säure und Harz mit einem Erweichungspunkt von mehr als 60 °C enthalten. Als Harze werden auch Kombinationen verschiedener Harze vorgeschlagen, wobei auch so genannte "mixed resins" eingesetzt werden. Diese "mixed resins" sind in diesem Fall Harzmischungen, bei denen ein aromatisch strukturiertes Monomer und ein aliphatisch strukturiertes Monomer polymerisiert sind. Struktol^{®} 40 MS wird als ein solches "mixed resin" bezeichnet und in Kombination mit anderen aliphatischen Harzen eingesetzt.

Der vorliegenden Erfindung liegt die Aufgabe zugrunde, eine Fahrzeugluftreifen bereitstellen, dessen Kautschukmischung für den Innerliner hinsichtlich der Verarbeitbarkeit, der Härte, der Rückprallelastizität bei 70 °C und der Luftdichtigkeit weiter verbessert ist.

Gelöst wird die Aufgabe dadurch, dass die Kautschukmischung für den Innerliner
- 80 bis 100 phr (Gewichtsteile, bezogen auf 100 Gewichtsteile der gesamten Kautschuke in der Mischung) zumindest eines Butylkautschukes und/oder eines halogenierten Butylkautschukes,
- zumindest einen Füllstoff,
- 1 bis 60 phr zumindest eines Cumaron-Inden-Harzes und
- 1 bis 60 phr zumindest eines aliphatischen Kohlenwasserstoffharzes enthält,
wobei die Gesamtmenge an Cumaron-Inden-Harz und aliphatischem Kohlenwasserstoffharz 65 phr nicht übersteigt.

Es hat sich überraschenderweise gezeigt, dass durch die spezielle Kombination von Cumaron-Inden-Harz mit aliphatischem Kohlenwasserstoffharz in Kautschukmischungen auf den Basis von Butylkautschuk und/oder halogeniertem Butylkautschuk eine besonders gute Verarbeitbarkeit bei gleichzeitig hoher Luftdichtigkeit/Gasdichtigkeit und angemessener Härte und Rückprallelastizität bei 70 °C erreicht werden kann. Dies könnte darin begründet liegen, dass diese spezielle Harzkombination einen optimalen Übergang zwischen Füllstoff und Kautschukpolymer schafft. Außerdem weisen die Kautschukmischungen ein vorteilhaftes Vulkanisationsverhalten halten auf. Sie haben eine erhöhte Anvulkanisationszeit (t₁₀) und eine verringerte Vulkanisationszeit bis zu 40 %iger Vernetzung (t₄₀), bieten demnach eine Prozesssicherheit bei wirtschaftlicherer Produktion. Ein Fahrzeugluftreifen mit einem Innerliner aus einer solchen Kautschukmischung zeichnet sich durch eine gute Herstellbarkeit und eine hohe Haltbarkeit aus. An den Innerliner angrenzende Bauteile im Reifen werden durch die verringerte Gasdurchlässigkeit einer geringeren oxidativen Belastung und Alterung ausgesetzt und der Reifendruck nimmt deutlich langsamer ab. Ggf. kann die Dicke des Innerliners reduziert werden.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung für den Innerliner enthält 80 bis 100 phr zumindest eines Butylkautschukes und/oder einer halogenierten Butylkautschukes, wobei die Kautschuke sowohl als frisch produzierte Kautschuke als auch als Regenerat eingesetzt werden können.

Vorzugsweise werden enthält die Kautschukmischung für eine verringerte Gasdurchlässigkeit 80 bis 100 phr zumindest eines halogenierten Butylkautschukes. Dabei kann es sich um Chlor- und/oder Brombutylkautschuk handeln.

Die Kautschukmischung für den Innerliner kann neben den Butyl- und/oder Halobutylkautschuken noch bis zu 20 phr zumindest eines weiteren Dienkautschukes, ausgewählt aus der Gruppe, bestehend aus Polyisopren, Polybutadien, Styrol-Butadien-Copolymer und epoxidiertem Naturkautschuk, enthalten. Die Dienkautschuke können am Kettenende und/oder entlang der Polymerkette und/oder in einem Kopplungszentrum mit zumindest einer Gruppe ausgewählt aus Epoxygruppen, Hydroxygruppen, Carboxygruppen, Silan-Sulfidgruppen, Aminogruppen, Siloxangruppen, Organosiliciumgruppen, Phthalocyaningruppen und Aminogruppen enthaltenden Alkoxysilylgruppen funktionalisiert sein.

Als Füllstoffe kann die Kautschukmischung für den Innerliner alle dem Fachmann für solche Mischungen bekannten Füllstoffe einsetzen. Zu diesen Füllstoffen zählen voluminöse wenig bzw. nicht aktive Füllstoffe, wie spezielle Rußtypen, Kaolin oder Kreide. Bei weiteren, in Kautschukmischung vorhandenen Füllstoffen kann es sich z. B. um Kieselsäure, Aluminiumoxide, Calciumcarbonat, Calciumhydroxid, Schichtsilikate, Talk, Graphit, Magnesiumoxid, Magnesiumhydroxid und Zeolithe in beliebigen Kombinationen handeln.

Die Kautschukmischung für den Innerliner enthält 1 bis 60 phr, vorzugsweise 5 bis 30 phr, zumindest eines Cumaron-Inden-Harzes. Derartige Harze fallen bei der Polymerisation der im Leichtöl des Steinkohlenteers enthaltenen ungesättigten Verbindungen, wie Inden und Cumaron (Benzofuran), an.

Ferner enthält die Kautschukmischung für den Innerliner 1 bis 60 phr, vorzugsweise 5 bis 30 phr zumindest eines aliphatischen Kohlenwasserstoffharzes. Aliphatische Kohlenwasserstoffharze sind dabei Harze, die durch Polymerisation von Monomeren enthaltend C5- und/oder C6- Olefine erhalten werden. Diese Monomere fallen beispielsweise beim Cracken von Erdöl an.

Neben den genannten Substanzen kann die Kautschukmischung für den Innerliner übliche Kautschukzuschlagstoffe in üblichen Mengen enthalten. Zu diesen Stoffen zählen z. B. Weichmacher, insbesondere Mineralölweichmacher, Alterungsschutzmittel, Aktivatoren, wie z. B. Zinkoxid und Fettsäuren (z. B. Stearinsäure), Wachse und Mastikationshilfsmittel.

Gemäß einer vorteilhaften Weiterbildung der Erfindung ist die Kautschukmischung für den Innerliner frei von Weichmacherölen und Verarbeitungshilfsmitteln, insbesondere frei von Mineralölweichmachern. Es hat sich herausgestellt, dass die Harzkombination gemäß der Erfindung Weichmacheröle, wie die oftmals als ökologisch bedenklich eingestuften Mineralölweichmacher ersetzen kann, ohne dass Einbußen in sonstigen gewünschten Eigenschaften des Innerliners hingenommen werden müssen.

Die Kautschukmischung für den Innerliner ist in Anwesenheit von Schwefel und/oder Schwefelspendern vernetzt worden, dazu wurden der Ausgangsmischung in der Regel Vulkanisationsbeschleuniger zugesetzt. Die Vulkanisationsbeschleuniger können dabei ausgewählt werden aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Schwefel und/oder Schwefelspender sowie die Vulkanisationsbeschleuniger wurden in üblichen Mengen eingesetzt.

Die Herstellung der Kautschukmischung für den Innerliner erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Kalandervorgang, und in die Form eines Innerliners gebracht. Bei der Herstellung eines Fahrzeugluftreifens wird der kalandrierte Innerliner in üblicher Art und Weise auf die Reifenaufbautrommel aufgelegt und anschließend der Reifen mit weiteren Bauteilen zum Reifenrohling vervollständigt. Dieser wird nach dem Fachmann bekannten Verfahren vulkanisiert.

Der Fahrzeugluftreifen zeichnet sich durch eine einfach Herstellbarkeit bei hoher Gasdichtigkeit und Haltbarkeit aus.

Die Erfindung soll nun anhand von Vergleichs- und Ausführungsbeispielen, die in der Tabelle 1 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V, die Mischung für den erfindungsgemäßen Innerliner ist mit E gekennzeichnet. Die Mischungen unterscheiden sich nur in den Zuschlagsstoffen Weichmacheröl und Harz. Die Mischung 1(V) ist eine Kautschukmischung für Innerliner mit Weichmacherölen. In der Mischung 2(V) wurde ein Teil des Weichmacheröles durch ein aliphatisches Kohlenwasserstoffharz ersetzt. Mischung 3(V) enthält nur aliphatisches Kohlenwasserstoffharz und Mischung 4(V) nur Cumaron-Inden-Harz. Die Mischung 5(E) für den Fahrzeugluftreifen mit dem erfindungsgemäßen Innerliner enthält kein Weichmacheröl, jedoch die spezielle Kombination von Cumaron-Inden-Harz mit aliphatischem Kohlenwasserstoffharz.

Die Mischungsherstellung erfolgte unter üblichen Bedingungen in zwei Stufen in einem Labortangentialmischer. Die Umsatzzeiten bis zum Erreichen eines relativen Vernetzungsgrades von 10 % (t₁₀) bzw. 40 % (t₄₀) wurden durch Verfolgung des Vulkanisationsprozesses über ein rotorloses Vulkameter gemäß DIN 53 529 ermittelt. Ferner sind die Mooney-Viskositäten (ML 1+4) der Mischungen gemäß DIN 53 523 mit einem Scherscheibenviskosimeter bei 100 °C bestimmt worden.

Aus sämtlichen Mischungen wurden Prüfkörper durch 15 minütige Vulkanisation unter Druck bei 160 °C hergestellt und mit diesen Prüfkörpern für die Kautschukindustrie typische Materialeigenschaften bestimmt. Für die Tests an Prüfkörpern wurden folgende Testverfahren angewandt:
- Shore-A-Härte bei Raumtemperatur mittels Durometer gemäß DIN ISO 7619-1
- Rückprallelastizität bei 70°C gemäß DIN 53 512 oder ISO 4662 oder ASTM D 1054
- Luftpermeabilität gemäß DIN 53 536 bei 70 °C Lufttemperatur ohne und mit Alterung bei 70 °C über 14 Tage

Ferner wurden Reifen der Dimension 255/30 R 19 gebaut, deren Innerliner die Mischungen der Tabelle 1 aufwiesen, und mit diesen Reifen folgende Tests durchgeführt:
- Reifenhaltbarkeit: Trommeltest in Anlehnung an den Haltbarkeitstest nach FMVSS 139 im Hinblick auf die Riss-/Bruchfestigkeit von Innerliner und Seitenwand
- Rollwiderstand: gemäß ISO 28580

Die ermittelten Werte wurden in Performance (Leistung) umgerechnet, wobei die Vergleichsmischung V1 bei jeder getesteten Reifeneigenschaft auf 100 % Performance normiert wurde. Die Reifeneigenschaften der anderen Mischungen beziehen sich dann auf diese Mischung V1. Hierbei bedeuten Werte kleiner 100 % eine Verschlechterung in den Eigenschaften, während Werte größer 100 % eine Verbesserung darstellen.

**Tabelle 1**

| **Bestandteile** | **Einheit** | **1(V)** | **2(V)** | **3(V)** | **4(V)** | **5(E)** |
|---|---|---|---|---|---|---|
| Brombutylkautschuk | phr | 100 | 100 | 100 | 100 | 100 |
| Ruß N 660 | phr | 55 | 55 | 55 | 55 | 55 |
| Weichmacheröl/Verarbeitungshilfsmittel | phr | 16 | 8 | - | - | - |
| aliphat. Harz^{a} | phr | - | 12 | 20 | - | 12 |
| Cumaron-Inden-Harz^{b} | phr | - | - | - | 20 | 8 |
| Stearinsäure | phr | 2 | 2 | 2 | 2 | 2 |
| Zinkoxid | phr | 3 | 3 | 3 | 3 | 3 |
| Beschleuniger | phr | 1,2 | 1,2 | 1,2 | 1,2 | 1,2 |
| Verzögerer | phr | 0,2 | 0,2 | 0,2 | 0,2 | 0,2 |
| Schwefel | phr | 0,62 | 0,62 | 0,62 | 0,62 | 0,62 |

| **Eigenschaften** | | | | | | |
|---|---|---|---|---|---|---|
| t₁₀ | min | 3,95 | 3,3 | 2,2 | 3,3 | 2,3 |
| t₄₀ | min | 7,5 | 6 | 4,3 | 7,6 | 4,3 |
| Mooney ML 1+4 | - | 69 | 71 | 73 | 61 | 69 |
| Shorehärte | ShA | 49 | 52,8 | 51,6 | 42,6 | 45,9 |
| Rückprallelastizität | % | 36,5 | 32,7 | 34,8 | 33,2 | 34,5 |
| Luftpermeabilität bei 70 °C ohne Alterung | m²/Pa^{∗}s | 4,3^{∗}10⁻¹⁷ | 3,1^{∗}10⁻¹⁷ | 2,8^{∗}10⁻¹⁷ | 3,7^{∗}10⁻¹⁷ | 3,3^{∗}10⁻¹⁷ |
| Luftpermeabilität bei 70 °C nach Alterung | m²/Pa^{∗}s | 4,4^{∗}10⁻¹⁷ | 3,5^{∗}10⁻¹⁷ | 3,0^{∗}10⁻¹⁷ | 3,9^{∗}10⁻¹⁷ | 3,3^{∗}10⁻¹⁷ |

| **Reifeneigenschaften** | | | | | | |
|---|---|---|---|---|---|---|
| Reifenhaltbarkeit | % | 100 | 124 | 103 | 172 | 140 |
| Rollwiderstand | % | 100 | 100,3 | 99,9 | 99,7 | 100,8 |

| | | | | | | |
|---|---|---|---|---|---|---|
| ^{a} aliphatisches C5-Harz mit enger Molekulargewichtsverteilung, Piccotac^{™} 1095, Eastman Chemical Company ^{b} Cumaron-Inden-Harz, Novares^{®} C 90, Rütgers Chemicals | | | | | | |

Aus der Tabelle 1 wird ersichtlich, dass durch die spezielle Kombination der beiden Harze in der Mischung 5(E) ein gutes Verarbeitungsverhalten (Indikator sind die Mooney-Viskosität und die niedrigen Anvulkanisationszeiten (t₁₀/t₄₀)) bei geringer Luftdurchlässigkeit erzielt werden kann. Besonders überraschend ist der Effekt der Kombination der Harze bei der Rückprallelastizität bei 70 °C, die als Indikator für den Rollwiderstand dient. Eine geringe Rückprallelastizität geht üblicherweise mit einem niedrigen Rollwiderstand einher. Kombiniert man beide Harze, so erhält man nicht, wie aus den Einzelmaßnahmen gemäß 3(V) und 4(V) zu erwarten, eine deutlich verringerte Rückprallelastizität bei 70 °C, sondern eine, die auf dem Niveau der 3(V) liegt. Der Reifen mit der Mischung 5(E) weist auch eine hohe Reifenhaltbarkeit im Hinblick auf die Riss-/Bruchfestigkeit von Innerliner und Seitenwand und einen niedrigen Rollwiderstand auf.

Gleichzeitig ist von Vorteil, dass mit der Mischung 5(E) für den Innerliner zumindest gleich gute Eigenschaften erzielt werden wie mit der Mischung 1(V), wobei jedoch keine Weichmacheröle und Verarbeitungshilfsmittel, insbesondere Mineralölweichmacher, eingesetzt werden müssen.

## Patentansprüche

1. Fahrzeugluftreifen mit einem Innerliner aus einer schwefelvernetzten Kautschukmischung, die
- 80 bis 100 phr (Gewichtsteile, bezogen auf 100 Gewichtsteile der gesamten Kautschuke in der Mischung) zumindest eines Butylkautschukes und/oder eines halogenierten Butylkautschukes,
- zumindest einen Füllstoff,
- 1 bis 60 phr zumindest eines Cumaron-Inden-Harzes und
- 1 bis 60 phr zumindest eines aliphatischen Kohlenwasserstoffharzes enthält, wobei die Gesamtmenge an Cumaron-Inden-Harz und aliphatischem Kohlenwasserstoffharz 65 phr nicht übersteigt.

2. Fahrzeugluftreifen nach Anspruch 1, **dadurch gekennzeichnet, dass** die Kautschukmischung des Innerliners 80 bis 100 phr zumindest eines halogenierten Butylkautschukes enthält.

3. Fahrzeugluftreifen nach Anspruch 1 oder 2, **dadurch gekennzeichnet, dass** die Kautschukmischung des Innerliners bis zu 20 phr zumindest eines weiteren Dienkautschukes ausgewählt aus der Gruppe bestehend aus Polyisopren, Polybutadien, Styrol-Butadien-Copolymer und epoxidiertem Naturkautschuk enthält.

4. Fahrzeugluftreifen nach zumindest einem der Ansprüche 1 bis 3, **dadurch gekennzeichnet, dass** die Kautschukmischung des Innerliners 5 bis 30 phr zumindest eines Cumaron-Inden-Harzes enthält.

5. Fahrzeugluftreifen nach zumindest einem der vorhergehenden Ansprüche, **dadurch gekennzeichnet, dass** die Kautschukmischung des Innerliners 5 bis 30 phr zumindest eines aliphatischen Kohlenwasserstoffharzes enthält.

6. Fahrzeugluftreifen nach zumindest einem der vorhergehenden Ansprüche, **dadurch gekennzeichnet, dass** die Kautschukmischung des Innerliners frei von Weichmacherölen und Verarbeitungshilfsmitteln, insbesondere Mineralölweichmachern, ist.

## Claims

1. Pneumatic vehicle tire having an inner liner composed of a sulfur-crosslinked rubber mixture containing
- 80 to 100 phr (parts by weight, based on 100 parts by weight of all rubbers in the mixture) of at least one butyl rubber and/or halogenated butyl rubber,
- at least one filler,
- 1 to 60 phr of at least one coumarone-indene resin and
- 1 to 60 phr of at least one aliphatic hydrocarbon resin,
wherein the total mass of coumarone-indene resin and aliphatic hydrocarbon resin does not exceed 65 phr.

2. Pneumatic vehicle tire according to Claim 1, **characterized in that** the rubber mixture of the inner liner contains 80 to 100 phr of at least one halogenated butyl rubber.

3. Pneumatic vehicle tire according to Claim 1 or 2, **characterized in that** the rubber mixture of the inner liner contains up to 20 phr of at least one further diene rubber selected from the group consisting of polyisoprene, polybutadiene, styrene-butadiene copolymer and epoxidized natural rubber.

4. Pneumatic vehicle tire according to at least one of Claims 1 to 3, **characterized in that** the rubber mixture of the inner liner contains 5 to 30 phr of at least one coumarone-indene resin.

5. Pneumatic vehicle tire according to at least one of the preceding claims, **characterized in that** the rubber mixture of the inner liner contains 5 to 30 phr of at least one aliphatic hydrocarbon resin.

6. Pneumatic vehicle tire according to at least one of the preceding claims, **characterized in that** the rubber mixture of the inner liner is free of plasticizer oils and processing aids, especially mineral oil plasticizers.

## Revendications

1. Pneumatique pour véhicule comportant un calandrage intérieur composé d'un mélange de caoutchouc réticulé au soufre, qui contient
- 80 à 100 phr (parties en poids, par rapport à 100 parties en poids des caoutchoucs totaux dans le mélange) d'au moins un caoutchouc de butyle et/ou d'au moins un caoutchouc de butyle halogéné,
- au moins une charge,
- 1 à 60 phr d'au moins une résine de coumarone-indène et
- 1 à 60 phr d'au moins une résine d'hydrocarbure aliphatique,
la quantité totale de résine de coumarone-indène et de résine d'hydrocarbure aliphatique ne dépassant pas 65 phr.

2. Pneumatique pour véhicule selon la revendication 1, **caractérisé en ce que** le mélange de caoutchouc du calandrage intérieur contient 80 à 100 phr d'au moins un caoutchouc de butyle halogéné.

3. Pneumatique pour véhicule selon la revendication 1 ou 2, **caractérisé en ce que** le mélange de caoutchouc du calandrage intérieur contient jusqu'à 20 phr d'au moins un caoutchouc de diène supplémentaire choisi dans le groupe constitué par un polyisoprène, un polybutadiène, un copolymère de styrène-butadiène et un caoutchouc naturel époxydé.

4. Pneumatique pour véhicule selon au moins l'une des revendications 1 à 3, **caractérisé en ce que** le mélange de caoutchouc du calandrage intérieur contient 5 à 30 phr d'au moins une résine de coumarone-indène.

5. Pneumatique pour véhicule selon au moins l'une quelconque des revendications précédentes, **caractérisé en ce que** le mélange de caoutchouc du calandrage intérieur contient 5 à 30 phr d'au moins une résine d'hydrocarbure aliphatique.

6. Pneumatique pour véhicule selon au moins l'une quelconque des revendications précédentes, **caractérisé en ce que** le mélange de caoutchouc du calandrage intérieur est exempt d'huiles de dilution et d'auxiliaires de traitement, en particulier d'assouplissants de type huile minérale.
